# EUROPÄISCHE PATENTSCHRIFT

(11) **EP 1 537 372 B1**
(45) Veröffentlichungstag und Bekanntmachung des Hinweises auf die Patenterteilung: **21.10.2009**
(21) Anmeldenummer: 03794958.3
(22) Anmeldetag: 28.08.2003
(51) Int. Cl.: F27D 11/10, H05B 7/10

(54) **VERFAHREN UND VORRICHTUNGEN ZUR ÜBERWACHUNG DES VON EINEM ANSTELLZYLINDER HERRÜHRENDEN, EINE AUSWECHSELBARE ELEKTRODE AM ELEKTRODENTRAGARM FESTLEGENDEN SPANNDRUCKS**
METHODS AND DEVICES FOR MONITORING A CLAMPING PRESSURE, WHICH IS EXERTED BY AN ACTUATING CYLINDER AND FIXES AN INTERCHANGEABLE ELECTRODE TO THE ELECTRODE SUPPORT ARM
PROCEDES ET DISPOSITIFS DE CONTROLE D'UNE PRESSION DE SERRAGE ISSUE D'UN CYLINDRE D'ACTIONNEMENT, FIXANT UNE ELECTRODE INTERCHANGEABLE SUR UN BRAS SUPPORT D'ELECTRODE

(30) Priorität: 28.08.2002 DE 10239470; 13.03.2003 DE 10311426
(43) Veröffentlichungstag der Anmeldung: 08.06.2005
(73) Patentinhaber: Dung, Arndt, 58093 Hagen (DE)
(72) Erfinder: Dung, Arndt, 58093 Hagen (DE)
(74) Vertreter: Henfling, Fritz
(86) Internationale Anmeldenummer: PCT/EP2003/009530
(87) Internationale Veröffentlichungsnummer: WO 2004/025202

(56) Entgegenhaltungen:
- DE-A- 4 446 538
- US-A- 3 937 869
- US-A- 4 182 927
- PATENT ABSTRACTS OF JAPAN vol. 1999, no. 02, 26. Februar 1999 (1999-02-26) & JP 10 291105 A (TOYOTA MOTOR CORP), 4. November 1998 (1998-11-04)

## Beschreibung

Vorrichtung zur Überwachung des von einem Anstellzylinder herrührenden Spanndrucks, mit dem die auswechselbare Elektrode am Elektrodentragarm festgelegt wird und mit der Vorrichtung realisierbare Verfahren zur Überwachung des Spanndrucks

Die Erfindung betrifft eine Vorrichtung zur Überwachung des von einem Anstellzylinder herrührenden Spanndrucks, mit dem die auswechselbare Elektrode am Elektrodentragarm festgelegt wird und mit der Vorrichtung realisierbare Verfahren zur Überwachung des Spanndrucks.

Nach dem Stand der Technik erfolgt die Einspannung der dem Elektrodentragarm von Elektroöfen auswechselbar zuzuordnenden Elektrode in der dafür vorgesehenen, am Tragarm ausgebildeten Aufnahme mit Hilfe von einstufigen Zylindern, deren Kolbenstange unter Federdruck ein- bzw. ausfahrend, die Klemmung der Elektrode in der Aufnahme herbeiführt. Je nach Einbausituation des Anstellzylinders befinden sich die Andruckfedern im Ringraum oder aber im bodenseitigen Zylinderraum des Anstellzylinders. Das Lösen der Einspannung wird durch Einspeisung von Druckmittel in den bodenseitigen Zylinderraum oder aber in den Ringraum des Anstellzylinders bewirkt, unter dessen Einwirkung das Aus- bzw. Einfahren der Kolbenstange gegen die die Ein- bzw. Ausfahrsituation bewirkende Kraft der Anstellfedern erfolgt. Um sicherzustellen, dass eine hinreichende Spannkraft für die Elektrodeneinspannung während des laufenden Betriebes vorliegt, bedarf es bislang in regelmäßigen Abständen der Überprüfung der Spannkraft dergestalt, dass bei aus der Elektrodenaufnahme entnommener Elektrode ein auf die Elektrode und damit dann auch auf die Aufnahme ausgelegter Spanndruckmesser in die Elektrodenaufnahme überführt und den aktuellen Spanndruck messend angestellt wird (Flohe-Katalog "Hochstromtechnik" 1998 Nr. 3, Seite 28). Diese Art und Weise der Überwachung des Spanndrucks ist zu Lasten des laufenden Betriebes relativ zeitaufwendig, sie schließt auch ein Lösen der eingespannten Elektrode während des laufenden Betriebes bei zunächst nicht festgestelltem Druckabfall mit entsprechenden Konsequenzen für den Betriebsablauf nicht aus.

Der US-4-182 927 A ist zwar die kontrollierte Einspannung einer auswechselbaren Elektrode in der Bestandteil eines Elektrodentragarms bildenden Elektrodenaufnahme zu entnehmen, wobei der auf der Federkraft zurückzuführende Spanndruck durch zusätzliche hydraulische Druckbeaufschlagung unterstützt werden und bei Abfall der Federkraft dann auch ausgeglichen werden kann, eine Signalisierung von Druckabfall an das Ofenpersonal ist hierbei allerdings nicht vorgesehen. Der JP 10291105 A ist auch schon eine Spanndrucküberwachung für Werkzeuge zu entnehmen, die auf einer im Anstellzylinder unter der Einwirkung des von einem Federpaket erzeugten Einspanndrucks stehenden Messdose basiert, von der Messwerte zu einer außerhalb des Zylinders befindlichen PC-Anzeige übermittelt werden. Eine Übertragung dieses Überwachungsprinzips auf die Einspannung der auswechselbaren Elektrode am freien Ende des Elektrodentragarms verbietet sich allerdings, da die Messwerte hierbei durch von der Energieversorgung der Elektrode herrührende, auf Störfelder zurückführende Einflüsse verfälscht würden.

Ausgehend vom Stand der Technik liegt der Erfindung die Aufgabe zugrunde, in erster Linie die Möglichkeit der Überwachung des Spanndrucks der die Festlegung der Elektrode in der Elektrodenaufnahme eines Tragarms eines Elektroofens bewirkenden Druckfeder im laufenden Betrieb zu eröffnen, aber auch die Möglichkeit des Auswechselns des Spannzylinders zu erweitern, dann auch nur das Federpaket anstelle des kompletten Spannzylinders zu wechseln.

Die vorrangige Aufgabe wird erfindungsgemäß mit einer Vorrichtung zur Überwachung des von einem Anstellzylinder herrührenden Spanndrucks, mit dem die auswechselbare Elektrode eines Elektroofens am freien Ende des Elektrodentragarms festgelegt ist, gelöst, die folgende konstruktiven Merkmale aufweist:
eine den Spanndruck messende Druckmessdose,
die dem Anstellzylinder bodenseitig zugeordnet ist und vom Spanndruck beaufschlagt wird,
eine ofenferne Druckmessanzeige, bei der die Messwerte über eine von der Druckmessdose ausgehende Leitung auflaufen,
einen vom Zylinderboden ausgehenden, die Druckmessdose durchsetzenden Stutzen,
und eine am Überstand des Stutzens über die Druckmessdose angesetzte, gegen die Druckmessdose zur Anlage kommende, die Druckmessdose kraftschlüssig mit dem Zylinderboden zusammenfassende Verschraubung.

Die unmittelbare leitungsgebundene Vermittlung des Spanndrucks im laufenden Betrieb an eine ofenferne Messwertanzeige erübrigt das Ansetzen eines Spanndruckmessers an die Elektrodenaufnahme, bei aus der Aufnahme entnommener Elektrode zu Lasten des laufenden Schmelzbetriebes, sie signalisiert dem Ofenpersonal dann auch Druckabfall, womit sich ein Lösen der eingespannten Elektrode während des laufenden Betriebes mit entsprechenden Konsequenzen für den Betriebsablauf vermeiden läßt. Die spezielle Zuordnung der Druckmessdose zum in den Elektrodentragarm eingelagerten Anstellzylinder eröffnet dann auch die Möglichkeit, bei erforderlich werdendem Auswechseln des Spannzylinders diese zum rückwärtigen Ende des Elektrodentragarms hin auszubauen und einen den ausgebauten Spannzylinder ersetzenden Spannzylinder vom rückwärtigen Ende in den Elektrodentragarm zu überführen.

Eine vorteilhafte Ausgestaltung der Lösung ist durch ein den dem Elektrodentragarm zugeordneten Anstellzylinder im Elektrodentragarm durch ein sich einerseits am Elektrodentragarm und andererseits am Anstellzylinder abstützendes, dem vom Zylinderboden ausgehenden Stutzen durchsetzendes, durch eine Verschraubung mit dem Elektrodentragarm lösbar zusammengefasstes, der Druckmessdose vorgelagertes Widerlager. Damit ist die Möglichkeit eröffnet, den Spannzylinder in beiden Richtungen, also sowohl zur Tragarmsäule als auch zum Elektroofen hin, aus- und dann auch wieder einzubauen. Vorgesehen sein kann, dass die Druckmessdose einen sich in den Bodenraum des Anstellzylinders fortsetzenden Durchgang für die Einspeisung des Lösungsdruckmittels in den Bodenraum aufweist. Damit entfällt der unmittelbare Anschluss der Druckmessleitung an den Spannzylinder, also das dafür erforderliche zusätzliche Anbohren des Spannzylinders.

Eine bei Unterschreiten des Mindestspanndrucks ansprechende akustische und/oder optische Signalgabe stellt sicher, daß das Ofenpersonal auf den Spanndruckabfall aufmerksam wird. Vorgesehen sein kann sowohl die diskrete als auch die kontinuierliche Übermittlung der Messwerte an die Messwertanzeige.

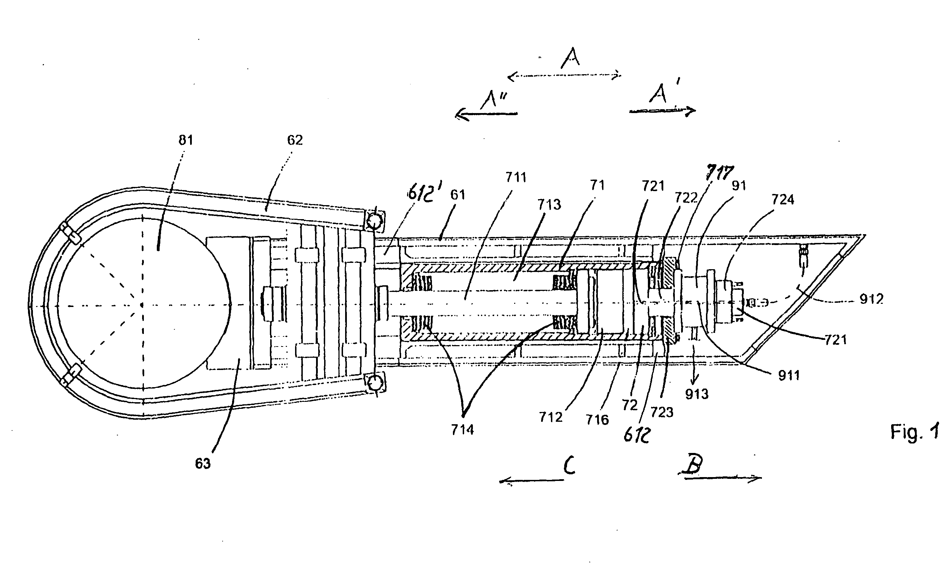

In der Zeichnung (Figur 1) ist die Erfindung anhand eines Ausführungsbeispiels weitergehend erläutert. Dargestellt ist das den Anstellzylinder 71 aufnehmende Kopfstück 61 eines Elektrodentragarms. Zugeordnet ist die Druckmessdose 91 dem Anstellzylinder 71 bodenseitig außerhalb des Anstellzylinders. Im Einzelnen: Am Kopfstück 61 des Elektrodentragarms führt sich der Spannbügel 62 in axialer Richtung im Sinne des Doppelpfeiles A verlagerbar. Im Sinne des Pfeiles A^{I} verlagert, legt er die Elektrode 81 gegenüber der Kontaktbacke 63 fest. Die die Einspannung der Elektrode 81 bewirkende Anstellung des Spannbügels 62 erfolgt über den im Elektrodentragarm, d.h. im Kopfstück 61 des Tragarms, gelagerten, einstufigen Anstellzylinder 71, dessen Kolbenstange 711 mit ihrem freien Ende am Spannbügel 62 angreift, wobei das im Ringraum 713 des Anstellzylinders 71 befindliche, auf den Kolben 712 einwirkende Federpaket 714 die Anstellung der Kolbenstange 711 im Sinne des Pfeiles A^{I} die Einspannung der Elektrode 81 bewirkt. Zum Lösen der Einspannung durch Verlagerung der Kolbenstange 711 im Sinne des Pfeiles A^{II} und damit dann auch des Spannbügels 62 im Sinne des Pfeiles A^{II} wird Druckmittel in den Bodenraum 716 des Spannzylinders 71, die Federkraft des Federpakets 714 überwindend, eingespeist.

Dem Boden 72 des Anstellzylinders 71 vorgelagert ist die Druckmessdose 91, die von einem zentrischen Durchgang 911 durchsetzt ist, der in eine im Bodenraum 716 des Anstellzylinders 71 mündende Bohrung 721 im Boden 72 des Anstellzylinders übergeht. Auf der vom Anstellzylinder 71 abgewandten Seite der Druckmessdose ist an den Durchgang 911 die Druckmittelleitung 912 für die Einspeisung des Lösungsdrucks in den Bodenraum 716 des Anstellzylinders 71 angeschlossen. Mit 913 ist der Anschluß für eine zur ofenfernen Messwertanzeige (Messwarte) führende, den in der Druckmessdose 91 anstehenden Druck übermittelnde Leitung bezeichnet. Werden die das Widerlager festlegenden Schrauben 770 gelöst, dann auch die Lösungsdruckmittelleitung 912, ist die Möglichkeit eröffnet, den Spannzylinder 71 sowohl zur Tragarmsäule als auch zum Elektroofen hin auszubauen (Hub B) und in entsprechender Weise den neuen Spannzylinder 71 dann auch wieder in den Tragarm 61, d.h. in die darin befindliche Aufnahme 611, einzufügen (Hub C). Mit 715, 715^{I} sind am Elektrodentragarm 61 ausgebildete Führungen bezeichnet, die den lagerechten Aus- und Einbau des Spannzylinders 71 sicherstellen.

Die der Messung unterliegende Kraft steht bei der dargestellten Lösung (Fig. 1) an der Druckmessdose 91 über den Zylinderboden 72 an, mit dem die Druckmessdose 91 kraftschlüssig zusammengefasst ist. Zusammengefasst ist die Druckmessdose 91 mit dem Zylinderboden 72 im dargestellten Fall über den vom Boden 72 ausgehenden Stutzen 722, zwischen dem und der die Druckmessdose auf dem Stutzen festlegenden Verschraubung 724 eingespannt ist.

Die Verschraubung 724 dient dann auch der Einstellung der gewünschten Vorspannung. Mit 723 ist das vom Stutzen 722 durchsetzte, lösbare (717), den Anstellzylinder 71 im Elektrodentragarm 11 festlegende Widerlager bezeichnet.

Unterschreitet der vom Bestandteil des Anstellzylinders 71 bildenden Federpakets 714 herrührende, die Elektrode 81 festlegende Spanndruck einen kritischen Wert, der die Einspannung der Elektrode nicht mehr gewährleistet, wird dieser Zustand von der dem Anstellzylinder 71 zugeordneten Druckmessdose 91 in der ofenfemen Messwarte angezeigt, das Bedienungspersonal erhält damit ohne weiteres den Hinweis, daß es erforderlich wird, den Anstellzylinder 71, zumindest das Bestandteil des Anstellzylinders bildende Federpaket 714, auszuwechseln.

### Bezugsziffernliste

- 61: Elektrodentragarm / Kopfstück
- 611: Aufnahme
- 612, 612^{I}: Führung
- 62: Spannbügel
- 63: Kontaktbacke
- 71: Anstellzylinder
- 711: Kolbenstange
- 712: Kolben
- 713: Ringraum
- 714: Federpaket
- 716: Bodenraum
- 717: Verschraubung
- 72: Zylinderboden
- 721: Bohrung
- 722: Stutzen
- 723: Widerlager
- 724: Verschraubung / Mutter
- 81: Elektrode
- 91: Druckmeßdose
- 911: Durchgang
- 912: Druckmittelleitung für den Lösungsdruck
- 913: zur Spanndruckmeßanzeige führende Leitung

- A: Hub des Spannzylinders
- A^{I}: Lösungshub
- A^{II}: Spannhub
- B: Ausbau zur Tragarmsäule hin
- C: Ausbau zum Elektroofen hin

## Patentansprüche

1. Vorrichtung zur Überwachung des von einem Anstellzylinder herrührenden Spanndrucks, mit dem eine auswechselbare Elektrode (81) eines Elektroofens am freien Ende des Elektrodentragarms (61) eingespannt ist, **gekennzeichnet durch** folgende Merkmale:
eine den Spanndruck messende Druckmeßdose (91),
die dem Anstellzylinder (71) bodenseitig zugeordnet ist und vom Spanndruck beaufschlagt wird,
eine ofenferne Druckmeßanzeige, bei der die Meßwerte über eine von der Druckmeßdose (91) ausgehende Leitung (913) auflaufen,
einen vom Zylinderboden (72) ausgehenden, die Druckmeßdose (91) durchsetzenden Stutzen (722)
und eine am Überstand des Stutzens (722) über die Druckmeßdose (91) angesetzte, gegen die Druckmeßdose (91) zur Anlage kommende, die Druckmeßdose kraftschlüssig mit dem Zylinderboden (72) zusammenfassende Verschraubung (724).

2. Vorrichtung nach Anspruch 1, **gekennzeichnet durch** ein den dem Elektrodentragarm (61) zugeordneten Anstellzylinder (71) im Elektrodentragarm (61) **durch** ein sich einerseits am Elektrodentragarm (61) und andererseits am Anstellzylinder (71) abstützendes, den vom Zylinderboden (72) ausgehenden Stutzen (722) durchsetzendes, **durch** eine Verschraubung (717) mit dem Elektrodentragarm (61) lösbar zusammengefaßtes, der Druckmeßdose (91) vorgelagertes Widerlager (723).

3. Vorrichtung nach Anspruch 1 oder Anspruch 2, **dadurch gekennzeichnet, daß** die Druckmeßdose (91) eine sich in den Bodenraum (716) des Anstellzylinders (71) fortsetzende Bohrung (721) für die Einspeisung von Druckmittel in den Bodenraum (716) des Anstellzylinders (71) aufweist.

4. Verfahren zur Überwachung des vom Anstellzylinder herrührenden Spanndrucks, mit dem die auswechselbare Elektrode eines Elektroofens am freien Ende des Elektrodentragarms eingespannt ist mittels einer Vorrichtung nach einem der Ansprüche 1 bis 3, **gekennzeichnet durch** eine in die Meßwertanzeige integrierte, bei Unterschreitet des Mindestspanndrucks ansprechende akustische und/oder optische Signalgabe.

5. Verfahren nach Anspruch 4, **gekennzeichnet durch** die diskrete Übermittlung der Meßwerte an die Meßwertanzeige.

6. Verfahren nach Anspruch 4, **gekennzeichnet durch** eine kontinuierliche Übermittlung der Meßwerte an die Meßwertanzeige.

## Claims

1. Device for monitoring the clamping pressure that originates from an adjusting cylinder, at which clamping pressure an exchangeable electrode (81) of an electric furnace is clamped at the free end of the electrode supporting arm (61), **characterized by** the following features:
a pressure load cell (91) that measures the clamping pressure,
said pressure load cell being assigned to the bottom of the adjusting cylinder (71) and being impinged upon by the clamping pressure,
a pressure load display which is remote from the furnace and on which the measured values are represented via a line (913) that extends from the pressure load cell (91),
a connecting piece (722) that extends from the cylinder bottom (72) and passes through the pressure load cell (91)
and a screw connection (724) that is arranged at the overhang of the connecting piece (722) over the pressure load cell (91), abuts against the pressure load cell (91) and joins the pressure load cell with the cylinder bottom (72) in a force-fitting manner.

2. Device according to Claim 1, **characterized by** an abutment (723) that is mounted upstream of the pressure load cell (91), is joined in a detachable manner to the electrode supporting arm (61) by means of a screw connection (717), passes through the connecting piece (722) that extends from the cylinder bottom (72), supports the adjusting cylinder (71), which is assigned to the electrode supporting arm (61), in the electrode supporting arm (61) on one side on the electrode supporting arm (61) and on the other side on the adjusting cylinder (71).

3. Device according to Claim 1 or Claim 2, **characterized in that** the pressure load cell (91) has a bore (721) which continues in the bottom space (716) of the adjusting cylinder (71) for the supplying of pressure medium into the bottom space (716) of the adjusting cylinder (71).

4. Method for monitoring the clamping pressure that originates from the adjusting cylinder, at which clamping pressure the exchangeable electrode of an electric furnace is clamped at the free end of the electrode supporting arm, using a device in accordance with one of Claims 1 to 3, **characterized by** an acoustic and/or optical signalling that is integrated in the measured-value display and responds when the clamping pressure falls below a minimum value.

5. Method according to Claim 4, **characterized by** the discrete transmission of the measured values to the measured value display.

6. Method according to Claim 4, **characterized by** a continuous transmission of the measured values to the measured value display.

## Revendications

1. Dispositif de surveillance de la pression de serrage provenant d'un vérin de réglage avec lequel une électrode interchangeable (81) d'un four électrique est serrée à l'extrémité libre du bras de support d'électrode (61), **caractérisé par** :
une capsule de mesure de la pression de serrage (91),
qui est assignée au vérin de réglage (71) du côté du fond et est soumise à la pression de serrage,
un affichage de la mesure de pression, à l'écart du four, sur lequel arrivent les valeurs de mesure par une ligne (913) provenant de la capsule de mesure de pression (91),
un embout (722) partant du fond de vérin (72) et traversant la capsule de mesure de pression (91),
et un système de vissage disposé sur le la partie de l'embout (722) dépassant au-delà de la capsule de mesure de pression (91), en butée sur la capsule de mesure de pression (91) assemblant en force la capsule de mesure de pression et le fond de vérin (72.

2. Dispositif selon la revendication 1, **caractérisé par** un embout (722) dépassant du fond de vérin (72), qui traverse la capsule de mesure de pression (91) s'appuyant d'une part sur le bras de support d'électrode (61) et d'autre part sur le vérin de réglage (71) et un système de vissage (717) assemblant de manière amovible la capsule de mesure de pression (91) avec le bras de support d'électrode (61) par l'intermédiaire d'un contre-appui (723) monté en avant de la capsule de mesure de pression (91).

3. Dispositif selon la revendication 1 ou 2, **caractérisé en ce que** la capsule de mesure de pression (91) présente un perçage (721), pour l'alimentation de la chambre de fond (716) du vérin de réglage (71) en fluide de pression, se prolongeant dans la chambre de fond (716) du vérin de réglage (71).

4. Procédé de surveillance de la pression de serrage provenant du vérin de réglage avec laquelle l'électrode interchangeable d'un four électrique peut être serrée à l'extrémité libre du bras de support d'électrode au moyen d'un dispositif selon l'une des revendications 1 à 3, **caractérisé par** l'émission, intégrée à l'affichage de la valeur de mesure, d'un signal acoustique et/ou optique activé par le passage au-dessous de la valeur minimale de pression.

5. Procédé selon la revendication 4, **caractérisé par** la transmission des valeurs de mesure à l'affichage de valeurs de mesure.

6. Procédé selon la revendication 4, **caractérisé par** une transmission en continu des valeurs de mesure à l'affichage de valeurs de mesure.
